# EUROPÄISCHE PATENTSCHRIFT

(11) **EP 1 527 519 B1**
(45) Veröffentlichungstag und Bekanntmachung des Hinweises auf die Patenterteilung: **23.08.2006**
(21) Anmeldenummer: 03738099.5
(22) Anmeldetag: 27.06.2003
(51) Int. Cl.: H03K 17/97, H01L 43/06, D06F 39/00

(54) **DREHWÄHLER**
ROTARY SWITCH
SELECTEUR ROTATIF

(30) Priorität: 31.07.2002 DE 10234923
(43) Veröffentlichungstag der Anmeldung: 04.05.2005
(73) Patentinhaber: BSH Bosch und Siemens Hausgeräte GmbH, 81739 München (DE)
(72) Erfinder: DIETRICH, Mike, 15848 Bornow (DE); MÜCKE, Wolfgang, 13156 Berlin (DE)
(86) Internationale Anmeldenummer: PCT/EP2003/006862
(87) Internationale Veröffentlichungsnummer: WO 2004/019494

(56) Entgegenhaltungen:
- EP-A- 0 867 792
- EP-A- 1 349 281
- DE-A- 4 432 399
- US-A- 4 983 812
- PATENT ABSTRACTS OF JAPAN vol. 006, no. 095 (E-110), 3. Juni 1982 (1982-06-03) & JP 57 027081 A (COPAL CO LTD), 13. Februar 1982 (1982-02-13)

## Beschreibung

Die Erfindung betrifft einen Drehwähler als Bedienungseinrichtung zur Ein-/Ausschaltung und automatischen Steuerung einer Anzahl unterschiedlicher Programmabläufe von elektrisch betriebenen Geräten, wie Waschmaschinen, Wäschetrocknern, Geschirrspülern oder vergleichbaren Geräten.

Nach dem Stand der Technik sind diese Drehwähler üblicherweise als mechanische Baugruppe ausgebildet, die sowohl für die Energiezu- und abschaltung für das jeweilige Gerät als auch mit einem Programmschaltwerk verbunden sind, das für die Steuerung hinsichtlich einer vorgegebenen Anzahl, der Art sowie die Dauer von entsprechenden Programmabläufen eingesetzt wird.

Programmschaltwerke gemäß der nach dem Stand der Technik bekannten Lösungen (DE-PS 20 40 464, 21 55 354 B1, 25 10 816 B1, 34 13 858 A1 oder 36 07 953 C2) weisen üblicherweise eine für den Programmablauf eingesetzte Programmtrommel oder Programmwalze auf, die für die separat ansteuerbaren Arbeitsgänge des jeweils eingestellten Programms ausgebildet ist.

Darüber hinaus wird auch der Schaltvorgang für den Drehrichtungswechsel eines Motors über das Programmschaltwerk bewerkstelligt, beispielsweise für eine Waschtrommel in einer Waschmaschine, wobei der Antrieb sowohl für die Programmtrommel als auch für die Reversiertrommel durch eine über Getriebe separat gesteuerte Transportklinke erfolgt.

Zum zeitlichen Ablauf der jeweiligen Arbeitsgänge sind bei diesen Lösungen zusätzliche Zeiteinstelleinheiten vorgesehen, die als Zeitgebernockenräder, Zeitgeberringe oder als mit der Programmtrommel gekoppelten Mehrzeitenring ausgebildet sind.

Eine als elektromechanisches Programmschaltwerk für ein Hausgerät verbesserte Einrichtung der vorgenannten Art ist ferner aus der

DE 3918712 bekannt, mit der eine für einen zusätzlichen Programmschritt frei wählbare Zusatzzeit ohne eigenen Antrieb ermöglicht werden soll.

Bei diesem bekannten Programmschaltwerk zur Steuerung des Hausgerätes sind eine Programmiertrommel und beispielsweise eine Reversiertrommel oder eine elektromotorisch angetriebene Vorsteuerscheibe sowie eine Zeitwahltrommel zur Einstellung einer Zusatzzeit vorgesehen.

Diese Zeitwahltrommel weist nach dieser Lösung wenigstens eine Steuerscheibe für mindestens einen Schaltkontakt und eine in ein Antriebsglied eingreifende Antriebsverzahnung auf. Das Antriebsglied steht dabei beispielsweise mit der Vorsteuerscheibe über einen an der Programmiertrommel anliegenden Tasthebel fortschaltbar derart in Verbindung, dass dasselbe erst freigegeben wird, wenn die Programmiertrommel in einer als Zusatzzeit vorgegebenen Stellung steht.

Nachteilig bei den nach dem Stand der Technik bekannten Lösungen ist insbesondere, dass eine Vielzahl mechanischer Einzelteile im Wesentlichen auf einer Schaltwelle zusammengefasst angeordnet sind, die überwiegend unabhängig voneinander über Schaltklinken sowie separate Antriebsmotoren und darüber hinaus federbelastet drehbeweglich sein müssen.

Weiterhin sind Schalträder mit verschiedener Zahnung erforderlich, in die die erwähnten Schaltklinken eingreifen, wodurch eine mechanische Zuordnung der Kontakte des Drehwählers zur jeweiligen Winkelposition festgelegt wird.

Durch die Verwendung einer Vielzahl mit hoher Präzision gefertigter Einzelteile und Baugruppen des Drehwählers nach dem Stand der Technik ist für seine Herstellung ein hoher Fertigungsaufwand und darüber hinaus für seinen Einsatz in entsprechenden Geräten zusätzlicher Justieraufwand erforderlich.

Das Dokument DE 44 32399 zeigt einen Drehwähler gemäß dem Oberbegriff des Anspruchs 1. Ausgehend von den Lösungen nach dem Stand derTechnik liegt der Erfindung die Aufgabe zugrunde, einen Drehwähler für die Programmsteuerung von Hausgeräten zu schaffen, der kostengünstig herzustellen und universell in großem Umfang einsetzbar ist.

Die Aufgabe wird ausgehend von den Lösungen der vorgenannten Art durch die Merkmale des Hauptanspruches gelöst. Vorteilhafte Ausgestaltungen und Weiterentwicklungen der Erfindung sind in zugehörigen Unteransprüchen beschrieben.

Mit der Erfindung wird in vorteilhafter Weise erreicht, dass der Aufwand für die Entwicklung und Herstellung des Drehwählers insgesamt verringert, seine Funktion verbessert, sein Einsatzbereich erweitert sowie die Nutzungsdauer wesentlich erhöht werden.

Darüber hinaus weist der Drehwähler eine, gegenüber den bekannten Lösungen, bedeutend geringere Baugröße auf, wodurch der Materialeinsatz und der Platzbedarf im entsprechenden Gerät, beispielsweise in einem Waschautomaten, verringert wird.

Der erfindungsgemäße Drehwähler arbeitet gegenüber den bekannten Lösungen mit magnetischer Positionserkennung der Schalterstellung mittels der Hall-Technologie, so dass der Drehwähler kontaktfrei ausgeführt ist. Verschleiß und dadurch auftretende Fehlfunktionen an den wesentlichen Schaltpositionen werden somit völlig vermieden, und darüber hinaus wird der Funktionsumfang erhöht.

Die lediglich im Bereich der Lagerung der Schaltwelle erforderliche Drehlagerung ist, im Verhältnis zur Betriebs- oder Lebensdauer des gesamten Gerätes, unwesentlich und daher ohne Bedeutung.

Die Erhöhung des Funktionsumfanges wird insbesondere dadurch erreicht, dass gegenüber den bekannten Lösungen der genannten Art zweihundertsechsundfünfzig (256) Schaltstellungen im Bereich zwischen 0° und 360° realisierbar sind.

Außerdem weist der Drehwähler gemäß der vorliegenden Erfindung gegenüber den bisherigen Lösungen den Vorteil auf, dass er wärmeunempfindlich und daher bis zu einem Arbeitstemperaturbereich von 120°C einsetzbar ist.

Die gemäß einer ersten Ausgestaltung der Erfindung vorgesehene Maßnahme ist besonders dazu geeignet, den jeweiligen Bearbeitungsstand des laufenden Programms in geeigneter Weise aufzubereiten und anzuzeigen.

Dazu ist gemäß der weiteren Ausgestaltung vorgesehen, die jeweiligen Wertegrößen an ein, an entsprechender Position am Gehäuse angeordnetes, geeignetes Display, zu ihrer optischen Darstellung und Erkennung weiterzuleiten.

Die folgenden Weiterentwicklungen sind insbesondere dazu geeignet, in bekannter Weise die Steuerung der Heizung und wenigstens eines Motors, beispielsweise für den Antrieb der Waschtrommel einer Waschmaschine, zu realisieren. Darüber hinaus sind diese Maßnahmen geeignet, sowohl die Medienver- und -entsorgung zu steuern sowie ferner den Anschluss weiterer externer Geräte zu ermöglichen.

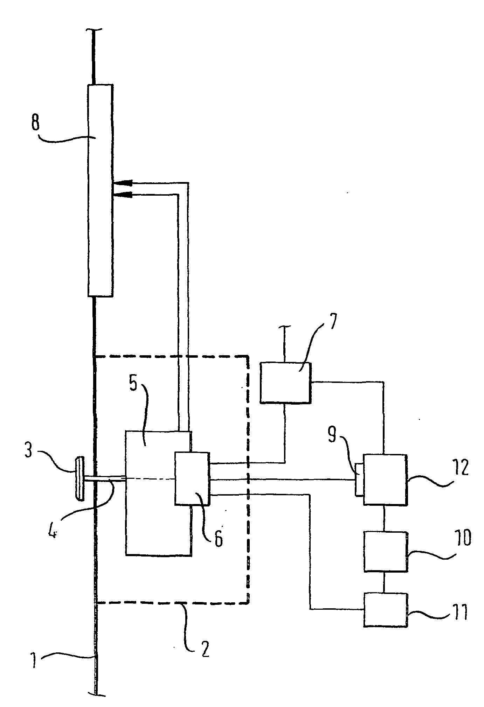

Die Erfindung wird nachfolgend in einem Ausführungsbeispiel anhand der einzigen Figur näher erläutert.

In dieser ist das Gehäuse eines Gerätes, beispielsweise eines Waschautomaten, mit der Position 1 gekennzeichnet.

Innerhalb des Gehäuses 1 ist an einer von außen erreichbaren, geeigneten Bedienposition ein Drehwähler 2 vorgesehen. Der Drehwähler 2 ist üblicherweise mit einem Bedienteil 3 außerhalb einer nicht näher bezeichneten Wandung am Gehäuse 1 angeordnet und steht über eine drehbare

Schaltwelle 4 mit an deren gehäuseseitigem Ende angeordnetem, lagefixierten Drehfeldsensor 5 mit einer Einrichtung 6 zur Positionsstellung in Verbindung.

Die Lagefixierung des Drehfeldsensors 5 erfolgt dabei gemäß dem beschriebenen Ausführungsbeispiel mittels seines Gehäuses in üblicher Weise durch geeignete, nicht näher dargestellte Befestigungsmittel am Gehäuse 1 in einer, für die das jeweilige Gerät nutzenden Person, ergonomisch günstigen Position.

Zur elektrischen Versorgung ist üblicherweise eine entsprechende Schalteinrichtung erforderlich, die hier als optionaler Netzschalter 7 ausgebildet ist und mit den jeweiligen Bauteilen und Baugruppen über nicht näher bezeichnete Kabel in Verbindung steht.Weiterhin ist an geeigneter Position eine Anzeigeeinrichtung 8 angeordnet, die beispielsweise als Display ausgebildet ist, welche die Funktionen und Betriebszustände des jeweiligen Gerätes anzeigt. Die erforderlichen Daten für die Anzeige werden über entsprechende und nicht näher bezeichnete Kabelverbindungen von der Baugruppe des Drehwählers 2 an die Anzeigeeinrichtung 8 in geeigneter Weise geleitet.

Die nach dem Ausführungsbeispiel beschriebene Waschmaschine ist üblicherweise mit einer Motorsteuerung 9 und einem geeigneten Motor 10 ausgestattet, wodurch die entsprechenden Bewegungen der Trommel für die einzelnen Wasch-, Spül- und Schleudervorgänge programmgemäß gesteuert ablaufen.

Für die Funktion des Gerätes gemäß dem Ausführungsbeispiel ist es unerlässlich, dass das für den Waschprozess sowie die folgenden Spülprozesse erforderliche Wasser sowohl gesteuert zugeführt als auch entsprechend aus dem Gerät entsorgt wird.

Dazu sind die entsprechenden und mit den Positionen 11 und 12 bezeichneten Einrichtungen, beispielsweise wenigstens ein Ventil und eine Pumpe, vorgesehen.

Im Folgenden wird die Wirkungsweise des erfindungsgemäßen Drehwählers kurz beschrieben:

Der Drehwähler fungiert als Bedienungseinrichtung zur Ein-/Ausschaltung und automatischen Steuerung einer Anzahl unterschiedlicher Programmabläufe von elektrisch betriebenen Geräten, wie Waschmaschinen, Wäschetrocknern, Geschirrspülern oder vergleichbaren Geräten. Dazu ist ein drehbar gelagertes Bedienteil (3) über eine Schaltwelle (4) mit einem magnetischen Drehfeldsensor (5) in Hall-Technologie verbunden. Im Drehfeldsensor (5) ist eine Schnittstelle integriert, über die ein winkelabhängiger Code an eine elektronische Auswerte- und Steuereinheit übertragen wird. Weiterhin ist eine Einrichtung (6) zur winkelgenauen Positionierung des Bedienteils (3) vorgesehen, wobei einer Position des Drehfeldsensors (5) in einer Schaltstellung des Bedienteils (3) ein Programmablauf zugeordnet ist.

Der Drehwähler kommuniziert über eine universell einsetzbare Schnittstelle, z.B. eine serielle Schnittstelle, mit der elektronischen Auswerte- und Steuereinheit und gibt, je nach Position bzw. Schaltstellung, einen winkelabhängigen Code an die elektronische Auswerte- und Steuereinheit weiter.

Der volle Drehwinkel von 360°C wird dabei erfindungsgemäß in zweihundertsechsundfünfzig (256) Bitmuster aufgeteilt, wobei jedem Bitmuster von der elektronischen Auswerte- und Steuereinheit ein Programmablauf zugeordnet werden kann.

Die Vorteile des neuen Drehwählers liegen, gegenüber den nach dem Stand der Technik bekannten Lösungen, insbesondere darin, dass mit dem erfindungsgemäßen eine große Anzahl verschiedenartiger Anwendungen flexibel und stufenlos angewählt und gesteuert werden können.

Somit können allein durch Programmierung der Auswerte- und Steuereinheit beliebige Programmabläufe und damit eine beinahe beliebige Programmvielfalt auf einfache Weise erzeugt werden, und der Drehwähler selbst ist damit universell für die Programmierung und Steuerung bei unterschiedlichsten Einsatzgebieten für alle erdenklichen elektrischen Geräte einsetzbar.

Bisher sind durch den fixen mechanischen Aufbau konventionelle Drehwähler keine beliebigen Positionsänderungen möglich gewesen. Die Variabilität der Positionsänderungen entlang dem Umfang des Bedienteils (3) wird erfindungsgemäß durch die hohe Auflösung des magnetischen Drehfeldsensors (5) erreicht. Es können Drehwähler für 8, 10, 12, 16 bis zu 256 Schaltstellungen beinahe stufenlos durch entsprechende Programmierung zur Verfügung gestellt werden.

Neben der Erhöhung der Programmvielfalt werden Entwicklungskosten durch Senkung der Entwicklungszeit eingespart, und darüber hinaus sind Sondervarianten von Drehwählern einfacher zu realisieren. Es steigt die Verfügbarkeit der Bauteile, und das Entwicklungsrisiko wird gesenkt.

Ebenso ergeben sich Einsparungen bei der elektronischen Auswerte- und Steuereinheit, da nur noch eine standardisierte Kommunikationsschnittstelle benötigt wird.

Außerdem sind gegenüber herkömmlichen Lösungen die Informationen auf dem zugehörigen Display durch Einsatz hochauflösender Codierung mit detaillierterer Anzeige darstellbar.

Als besonders vorteilhaft ist hervorzuheben, dass die Hall-Technologie verschleißfrei Schaltstellungen realisiert und somit schleifende und verschleißende Kontakte bei Drehwählern durch erfindungsgemäße Drehwähler ersetzt werden können.

## Patentansprüche

1. Drehwähler (2) als Bedienungseinrichtung zur Ein-/Ausschaltung und automatischen Steuerung einer Anzahl unterschiedlicher Programmabläufe von elektrisch betriebenen Geräten, wie Waschmaschinen, Wäschetrocknern, Geschirrspülern oder vergleichbaren Geräten, mit einem drehbar gelagerten Bedienteil (3) und mit einem magnetischen Drehfeldsensor (5), in dem eine Schnittstelle integriert ist, über die ein winkelabhängiger Code an eine elektronische Auswerte- und Steuereinheit übertragen wird, wobei einer Position des Drehfeldsensors (5) in einer Schaltstellung des Bedienteils (3) ein Programmablauf zugeordnet ist, **dadurch gekennzeichnet, dass** das Bedienteil (3) über eine Schaltwelle (4) mit dem Drehfeldsensor (5) in Hall-Technologie verbunden ist, dass ferner an dem gehäuseseitigem Ende der Schaltwelle (4) eine Einrichtung (6) zur winkelgenauen Positionierung des Bedienteils (3) vorgesehen ist, und dass durch die Hall-Technologie berührungslos die Schaltstellung realisiert wird.

2. Drehwähler nach Anspruch 1, **dadurch gekennzeichnet, dass** mit dem Drehfeldsensor (5) zweihundertsechsundfünfzig Schaltstellungen codierbar sind und dass korrespondierend zur Anzahl der benötigten Programmabläufe die Einrichtung (6) zur winkelgenauen Positionierung des Bedienteils (3) Schaltstellungen aufweist.

3. Drehwähler nach Anspruch 1 oder 2, **dadurch gekennzeichnet, dass** die elektronische Auswerte- und Steuereinheit zur Anzeige von Daten mit einer Anzeigeeinrichtung (8) in Verbindung steht.

4. Drehwähler nach einem der Ansprüche 1 bis 3, **dadurch gekennzeichnet, dass** die Zuordnung der Programmabläufe zu den Schaltstellungen des magnetischen Drehfeldsensors (5) frei programmierbar ausgebildet ist.

5. Drehwähler nach einem der Ansprüche 1 bis 4, **dadurch gekennzeichnet, dass** die Schnittstelle für die Übertragung und die Eingabe von Daten vom magnetischen Drehfeldsensors (5) an die elektronische Auswerte- und Steuereinheit zur Programmierung und Steuerung des Haushaltgerätes als serielle Schnittstelle ausgebildet ist.

## Claims

1. Rotary switch (2) as control device for switching-on/switching-off and automatic control of a number of different program sequences of electrically operated appliances, such as washing machines, laundry driers, dishwashers or comparable appliances, with a rotatably mounted operating part (3) and with a magnetic rotary field sensor (5) in which an interface is integrated, by way of which an angle-dependent code is transmitted to an electronic evaluating and control unit, wherein a position of the rotary field sensor (5) in a switch setting of the operating part (3) is associated with a program sequence, **characterised in that** the operating part (3) is connected by way of a switch shaft (4) with the rotary field sensor (5) in Hall technology, that in addition a device (6) or angularly precise positioning of the operating part (3) is provided at the end of the switch shaft (4) at the housing side and that the switch setting is realised contactlessly by Hall technology.

2. Rotary switch according to claim 1, **characterised in that** two hundred and fifty-six switch settings can be coded by the rotary field sensor (5) and that the device (6) for angularly precise positioning of the operating part (3) has switch settings corresponding with the number of required program sequences.

3. Rotary switch according to claim 1 or 2, **characterised in that** the electronic evaluating and control unit is, for indication of data, connected with a indicating device (8).

4. Rotary switch according to one of claims 1 to 3, **characterised in that** the association of the program sequences with the switch settings of the magnetic rotary field sensor (5) is formed to be freely programmable.

5. Rotary switch according to one of claims 1 to 4, **characterised in that** the interface for the transmission and input of data from the magnetic rotary field sensor (5) to the electronic evaluating and control unit for the programming and control of the domestic appliance is constructed as a serial interface.

## Revendications

1. Sélecteur rotatif (2) en tant que dispositif de commande pour allumer/éteindre et pour commander automatiquement un nombre de différents déroulements de programmes d'appareils commandés électriquement, tels que lave-linge, sèche-linge, lave-vaisselle ou appareils similaires, muni d'une pièce de commande (3) placée de manière rotative, et d'un capteur à champ magnétique rotatif (5) dans lequel est intégrée une interface, laquelle permet de transmettre un code dépendant d'un angle à une unité électronique d'évaluation et de commande, un déroulement de programme étant attribué à une position du capteur à champ magnétique rotatif (5) dans une position de commutation de la pièce de commande (3), **caractérisé en ce que** la pièce de commande (3) est raccordée au capteur à champ magnétique rotatif (5) par l'intermédiaire d'un arbre de commande (4) selon la technologie de Hall, **en ce qu'**en outre un dispositif (6) est prévu sur l'extrémité, côté boîtier, de l'arbre de commande (4) pour un positionnement de la pièce de commande (3) dans un angle précis, et **en ce que** la position de commutation est réalisée sans contact par technologie de Hall.

2. Sélecteur rotatif selon la revendication 1, **caractérisé en ce que** deux cent cinquante six positions de commutation peuvent être codées au moyen du capteur à champ magnétique rotatif (5) et **en ce que** le dispositif (6) pour le positionnement de la pièce de commande (3) dans un angle précis présente des positions de commutation de manière correspondant au nombre de programmes nécessaires.

3. Sélecteur rotatif selon la revendication 1 ou 2, **caractérisé en ce que** l'unité électronique d'évaluation et de commande est raccordée à un dispositif d'affichage (8) pour afficher des données.

4. Sélecteur rotatif selon l'une quelconque des revendications 1 à 3, **caractérisé en ce que** l'attribution des déroulements de programmes aux positions de commutation du capteur à champ magnétique rotatif (5) est librement programmable.

5. Sélecteur rotatif selon l'une quelconque des revendications 1 à 4, **caractérisé en ce que** l'interface pour la transmission et l'entrée de données du capteur à champ magnétique rotatif (5) à l'unité électronique d'évaluation et de commande pour la programmation et la commande de l'appareil ménager est exécutée comme interface série.
